(19) **Europäisches Patentamt / European Patent Office / Office européen des brevets**

(11) **EP 4 773 246 A1**

(12) **EUROPEAN PATENT APPLICATION**
published in accordance with Art. 153(4) EPC

(43) Date of publication:
08.07.2026 Bulletin 2026/28

(21) Application number: 25869619.4

(22) Date of filing: 21.10.2025

(51) International Patent Classification (IPC):
$H01M\ 4/587^{(2010.01)}$    $H01M\ 4/38^{(2006.01)}$
$H01M\ 4/36^{(2006.01)}$    $H01M\ 4/133^{(2010.01)}$
$H01M\ 4/134^{(2010.01)}$    $H01M\ 10/0525^{(2010.01)}$
$H01M\ 4/02^{(2006.01)}$

(52) Cooperative Patent Classification (CPC):
H01M 4/133; H01M 4/134; H01M 4/364;
H01M 4/366; H01M 4/386; H01M 4/583;
H01M 4/587; H01M 4/622; H01M 4/625;
H01M 10/052; H01M 10/0525; H01M 2004/021;
H01M 2004/027; Y02E 60/10

(86) International application number:
PCT/KR2025/016655

(87) International publication number:
WO 2026/089420 (30.04.2026 Gazette 2026/18)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 22.10.2024 KR 20240144985

(71) Applicant: LG Energy Solution, Ltd.
Seoul 07335 (KR)

(72) Inventors:
• KIM, Taeho
Yuseong-gu, Daejeon 34122 (KR)
• YANG, Hyun Jin
Yuseong-gu, Daejeon 34122 (KR)
• LEE, Seunggwan
Yuseong-gu, Daejeon 34122 (KR)
• SHIN, Sun Young
Yuseong-gu, Daejeon 34122 (KR)
• LEE, Yong Ju
Yuseong-gu, Daejeon 34122 (KR)

(74) Representative: Hoffmann Eitle
Patent- und Rechtsanwälte PartmbB
Arabellastraße 30
81925 München (DE)

(54) **SILICON-CARBON COMPOSITE, ANODE ACTIVE MATERIAL, ANODE AND SECONDARY BATTERY**

(57) Disclosed are a silicon-carbon composite in which, when subjected to etching with an argon (Ar) ion beam at an energy of 1,000 eV for 5,000 seconds followed by XPS analysis, a ratio of a proportion of Si measured from an $Si^{2p}$ spectrum to a proportion of N measured from an $N^{1s}$ spectrum is 35 to 200, a negative electrode active material including the silicon-carbon composite, a negative electrode composition, a negative electrode, a lithium secondary battery, a battery module, and a battery pack.

FIG. 3

EP 4 773 246 A1

**Description**

CROSS-REFERENCE TO RELATED APPLICATIONS

This application is based on and claims priority from Korean Patent Application No. 10-2024-0144985 filed on October 22, 2024, with the Korean Intellectual Property Office, the disclosure of which is incorporated herein in its entirety by reference.

TECHNICAL FIELD

The present application relates to a silicon-carbon composite, a negative electrode active material including the silicon-carbon composite, a negative electrode including the negative electrode active material, and a secondary battery including the negative electrode.

BACKGROUND

With the recent and rapid spread of electronic devices using batteries such as mobile phones, laptop computers, electric vehicles, power tools, and vacuum cleaners, the demand for secondary batteries that are compact and lightweight but have relatively high capacity and/or high output has been rapidly increasing. Lithium secondary batteries, having a lightweight and high energy density, are attracting attention as power sources for driving electronic devices. Accordingly, research and development efforts for improving the performance of lithium secondary batteries are actively being conducted.

The performance of lithium secondary batteries may be improved through innovation in respective core materials including a positive electrode material, negative electrode material, separator, and electrolyte, which are major components of the lithium secondary batteries.

SUMMARY

An embodiment of the present disclosure provides a silicon-carbon composite that may be used as a negative electrode active material with excellent capacity and/or efficiency characteristics and high energy density, a negative electrode active material, a negative electrode, and a lithium secondary battery.

An embodiment of the present disclosure provides a silicon-carbon composite in which, when subjected to etching with an argon (Ar) ion beam at an energy of 1000 eV for 5000 seconds followed by XPS analysis, a ratio of a proportion of Si measured from an $Si^{2p}$ spectrum to a proportion of N measured from an $N^{1s}$ spectrum is 35 to 200.

An embodiment of the present disclosure provides a negative electrode active material including the silicon-carbon composite according to the above-described embodiments.

An embodiment of the present disclosure provides a negative electrode composition including the negative electrode active material according to the above-described embodiment.

An embodiment of the present disclosure provides a negative electrode including the negative electrode composition according to the above-described embodiment.

An embodiment of the present disclosure provides a lithium secondary battery including a negative electrode, a positive electrode, and a separator according to the above-described embodiment.

An embodiment of the present disclosure provides a battery module including the lithium secondary battery according to the above-described embodiment.

An embodiment of the present disclosure provides a battery pack including the battery module according to the above-described embodiment.

According to the embodiments of the present disclosure, by using, as a negative electrode active material, a silicon-carbon composite in which, when subjected to etching with an argon (Ar) ion beam at an energy of 1,000 eV for 5,000 seconds followed by XPS analysis, a ratio of the proportion of Si measured from an $Si^{2p}$ spectrum to the proportion of N measured from an $N^{1s}$ spectrum satisfies a specific value, it is possible to provide a lithium secondary battery with improved capacity and/or efficiency.

BRIEF DESCRIPTION OF THE DRAWINGS

The following drawings attached to this specification illustrate preferred embodiments of the present disclosure, and serve to further enhance the understanding of the technical spirit of the present disclosure in conjunction with the detailed description provided below. Therefore, the present disclosure should not be construed as being limited only to matters depicted in these drawings.

FIG. 1 is a schematic diagram illustrating a structure of a lithium secondary battery, according to an embodiment of the present disclosure.

FIG. 2 is a schematic diagram illustrating a negative electrode of the lithium secondary battery, according to an embodiment of the present disclosure.

FIG. 3 is a diagram illustrating spectra obtained by analyzing, using XPS, silicon-carbon composites of Examples 1 to 4 after etching for 5,000 seconds.

FIG. 4 is a diagram illustrating spectra obtained by analyzing, using XPS, silicon-carbon composites of Comparative Examples 1 to 5 after etching for 5,000 seconds.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

DETAILED DESCRIPTION

Hereinafter, the present disclosure will be described in more detail to aid in understanding the present disclosure. The present disclosure may be embodied in various different forms and is not limited to the embodiments described herein.

It should be understood that terms such as "comprise," "include," or "have" in this specification are intended to specify the presence of a feature, number, step, element, or a combination thereof, and are not intended to preclude the possibility of the presence or addition of one or more other features, numbers, steps, elements, or combinations thereof.

Further, when a portion such as a layer is described as being "above" or "on" another portion, this includes not only a case where it is "directly above" the other portion, but also a case where another portion is interposed therebetween. Conversely, when a portion is described as being "directly above" another portion, it means that there is no other portion interposed therebetween. Further, when a portion is described as being "above" or "on" a reference portion, this means that the portion is positioned above or below the reference portion, and does not necessarily mean that the portion is positioned "above" or "on" the reference portion in a direction opposite to the direction of gravity.

The terms or words used in this specification should not be interpreted as being limited to ordinary or dictionary meanings, but should be interpreted in accordance with the meanings and concepts consistent with the technical spirit of the present disclosure, based on the principle that the inventors may appropriately define the concepts of the terms in order to best describe the disclosure.

The singular expressions of terms used in this specification include the plural expressions unless clearly indicated otherwise by the context.

Hereinafter, embodiments of the present disclosure will be described in detail. However, the embodiments of the present disclosure may be modified in various forms, and the scope of the present disclosure is not limited to the embodiments described below.

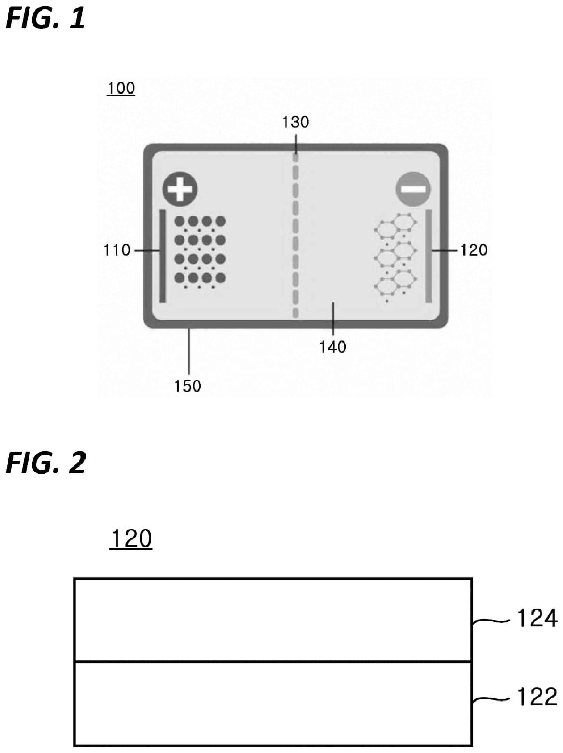

FIG. 1 is a schematic diagram illustrating the structure of a lithium secondary battery, according to an embodiment of the present disclosure.

Referring to FIG. 1, the lithium secondary battery 100, according to an embodiment of the present disclosure, includes a positive electrode 110, a negative electrode 120, a separator 130 interposed between the positive electrode 110 and the negative electrode 120, an electrolyte 140, and others. In the lithium secondary battery 100, during charge, lithium ions move from the positive electrode 110 to the negative electrode 120 through the separator 130 (*e.g.,* energy storage), while during discharge, lithium ions move from the negative electrode 120 to the positive electrode 110 through the separator 130, thereby generating electricity. In this process, the positive electrode 110 and the negative electrode 120 function to release or accept lithium ions, respectively, and utilize an electrochemical reaction in which electrons move through a wire connected between the positive electrode 110 and the negative electrode 120 to generate current, and lithium ions travel between the positive electrode 110 and the negative electrode 120 through the electrolyte 140.

Each of the positive electrode 110 and the negative electrode 120 of the lithium secondary battery 100 may be manufactured by forming an active material layer including a positive electrode active material and a negative electrode active material, respectively, on a current collector. In general, the positive electrode uses lithium-containing metal oxides such as $LiCoO_2$ and $LiMn_2O_4$ as the positive electrode active material, while the negative electrode uses carbon-based active materials and silicon-based active materials not containing lithium as the negative electrode active material.

FIG. 2 is a schematic diagram illustrating the negative electrode 120 of the lithium secondary battery 100, according to an embodiment of the present disclosure.

Referring to FIG. 2, the negative electrode 120 of the lithium secondary battery 100 according to an embodiment of the present disclosure includes a current collector 122 and a negative electrode active material layer 124.

A battery using graphite as a negative electrode active material may exhibit a high discharge voltage of 3.6 V, but has a limitation in increasing energy density due to its low capacity. In the meantime, silicon-based active materials have attracted attention as next-generation negative electrode active materials since they have high capacity and efficiency. Accordingly, development of silicon-based active materials with high capacity or efficiency characteristics is required. For example, an active material including a silicon-carbon composite that is composed of silicon having high capacity characteristics and a lightweight carbon element capable of mitigating volume expansion of silicon, may be developed.

Meanwhile, silicon-carbon composite active materials having high capacity, high efficiency, and long lifespan may cause problems in slurry processability, and it is important to improve processability for the development of high energy density lithium secondary batteries.

The present disclosure provides a silicon-carbon composite applied to a negative electrode active material of the lithium secondary battery 100, which is capable of maintaining high capacity and efficiency while improving slurry processability through the physical properties of porous carbon and the introduction of a surface coating layer, and a technique for manufacturing the negative electrode 120 using the same.

According to an embodiment of the present disclosure, the silicon-carbon composite is a composite of Si and C in which Si and C (*e.g.*, graphite) are present, respectively. In this specification, the silicon-carbon composite may be denoted as Si/C. The silicon-carbon composite may be composed of Si and C not bonded to each other, but may further contain additional components as needed. For example, the silicon-carbon composite may contain or may not contain a silicon carbide, denoted as SiC. When the silicon-carbon composite contains a silicon carbide, the content thereof is 3 wt% or less. The silicon-carbon composite may be in a crystalline state, an amorphous state, or a mixed state of the two. In one example, the C in the silicon-carbon composite may be in an amorphous state.

According to an embodiment, the silicon-carbon composite is a particle including a porous carbon particle and silicon provided on at least a part of the inside and surface of the porous carbon particle. The silicon may be formed by depositing silicon on the porous carbon particle using a silane gas. When necessary, a carbon layer may be further formed on the surface of the silicon-carbon composite. The carbon layer may impart electrical conductivity and enhance the initial efficiency, lifespan characteristics, and battery capacity characteristics of the secondary battery. The total weight of the carbon layer may be about 5 wt% to 40 wt% based on 100 wt% of the total silicon-carbon composite particle. The carbon layer may include at least one of amorphous carbon and crystalline carbon. As used herein, the terms "about", "approximately", "substantially" refer to a range of, or approximation to a numerical value or degrees, taking into account inherent manufacturing and material tolerances (*e.g.*, $\pm 5\%$).

According to an embodiment, the silicon-carbon composite may be a particle including a porous silicon particle and carbon provided on at least a part of the inside and surface of the porous silicon particle. This may be formed by etching a silicon oxide to create a silicon-based particle having a porous structure, for example, an Si matrix, followed by coating carbon. The above description regarding the carbon layer may be applied to the carbon.

A negative active material including the silicon-carbon composite according to an embodiment of the present disclosure may be prepared by the following method.

First, a carbon-based particle precursor is placed in an electric furnace, heated under a nitrogen atmosphere for a predetermined time, and thereafter, the resulting heated powder is mixed with, for example, a mixed solution of sulfuric acid and nitric acid, stirred at a predetermined temperature for a predetermined time, and then centrifuged to obtain a precipitate. The obtained precipitate is dried to produce a carbon-based particle.

Examples of the carbon-based particle precursor may include natural polymers, synthetic polymers, and biomass, for example, cellulose powder, polyacrylonitrile (PAN), phenolic resin, melamine resin, or coconut shells, but are not limited thereto, and other materials usable by those skilled in the art may also be used without limitation.

Thereafter, the carbon-based particle is heated in a specific solvent under a specific atmosphere to obtain a porous carbon structure, and the porous carbon structure is dried. Thereafter, the porous carbon structure is treated under a specific atmosphere to prepare a silicon-carbon composite. The silicon-carbon composite is reacted with a specific gas, for example, acetylene gas, in an electric furnace, thereby preparing a silicon-carbon composite negative electrode active material including a carbon layer on the outermost surface thereof.

In a silicon-carbon composite for a negative electrode active material prepared according to an embodiment of the present disclosure, when etched with an argon (Ar) ion beam and analyzed by X-ray photoelectron spectroscopy (XPS), a ratio of the proportion of Si measured from a $Si^{2p}$ spectrum to the proportion of N measured from an $N^{1s}$ spectrum is approximately 35 to 200, and the proportion of N measured from the $N^{1s}$ spectrum is approximately 0.35 atm% or more, based on 100 atm% of the total Si, C, O, and N contents in the silicon-carbon composite.

In this specification, X-ray photoelectron spectroscopy (XPS) is a technique for analyzing the surface chemical composition of a material, in which the surface of a sample is irradiated with high-energy X-rays to measure the binding energy of photoelectrons emitted from surface atoms. This enables qualitative and quantitative analysis of elements, and is capable of identifying the chemical state and environment of each element.

As described above, the method may further include a step of etching the silicon-carbon composite surface with an argon (Ar) ion beam prior to XPS analysis. By including the step of etching the silicon-carbon composite surface with an argon (Ar) ion beam, a surface layer of the sample, for example, a carbon coating layer surrounding the silicon-carbon composite, may be removed to analyze the elemental profile of a deeper layer inside the particle.

In an embodiment of the present disclosure, the step of etching the silicon-carbon composite surface with an argon (Ar) ion beam may be performed at an energy of approximately 1,000 eV for 5,000 seconds. By etching at the energy and time mentioned above, the outermost carbon coating layer may be sufficiently removed to ensure the reliability of data and maintain the inherent properties of the sample, thereby preventing errors in interpreting the chemical state of the sample.

In this specification, the $N^{1s}$ spectrum and the $Si^{2p}$ spectrum obtained through XPS analysis correspond to the detected photoelectrons emitted from the 1s orbital of a nitrogen atom and the 2p orbital of a silicon atom, respectively, and through these, the contents of nitrogen and silicon present on the negative electrode active material surface may be measured.

In this specification, the XPS analysis is performed under the following conditions.

<XPS Analysis Conditions>

- X-ray source: Monochromated Al K$\alpha$ (1486.6 eV)
- X-ray spot size: 400 $\mu$m
- Sputtering gun: Monatomic Ar (energy: 1,000 eV, current: low, raster width: 2mm)
- Etching rate: 0.09 nm/s for $Ta_2O_5$
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: 0.1V 150 $\mu$A
- SF: Al THERMO1
- ECF: TPP-2M
- BG subtraction: Smart

In an embodiment of the present disclosure, the depth profile of X-ray photoelectron spectroscopy (XPS) may be measured at a rate of 0.09 nm/s on a $Ta_2O_5$ sample using a monochromated Al K$\alpha$ X-ray source.

In this specification, the intensity of a peak refers to a value obtained by deconvoluting the $Si^{2p}$ spectrum obtained through XPS analysis for each peak, fitting each peak with a "Gaussian/Lorentzian" model, and then integrating the area under the resulting Gaussian function graph.

In this specification, peaks may overlap and appear as shoulder peaks, and two or more peaks may coexist.

In this specification, in a case where peaks overlap or coexist, the intensity of the peaks is calculated by summing the intensities of two or more peaks.

In this specification, the elemental content ratio may be calculated according to Equation 1:

[Equation 1]

$$C_i = \frac{\frac{A_i}{RSF_i}}{\sum_{j=1}^{n} \frac{A_j}{RSF_j}}$$

In Equation 1, $i$ denotes the type of element to be determined, and $j$ denotes types of all elements measured through XPS. Further, $C_i$ denotes the elemental content ratio, $A_i$ denotes the area corrected in consideration of the inelastic mean free path in a solid, and $RSF_i$ denotes the relative sensitivity factor. For example, when peaks of A and B are detected through XPS, the peak areas are 1,000 and 500, respectively, and the RSF values are 0.8 and 1.2, respectively, the elemental content ratio of A may be calculated as:

$$C_A = \frac{\frac{1,000}{0.8}}{\frac{1,000}{0.8} + \frac{500}{1.2}} = 0.75 \ (75\%).$$

In this specification, the intensity of an XPS peak for a specific element refers to the sum of all peaks appearing in the XPS spectrum of that element. For example, when the $Si^{2p}$ spectrum is observed by XPS, peaks representing various oxidation states such as $Si^0$, Si-C, and $Si^x$ $(0<x\leq4)$ appear. However, when calculating the elemental content ratio of Si, the peak intensity of Si is determined as the sum of the intensities of all these peaks.

In an embodiment of this specification, j may be any one of silicon, carbon, oxygen, and nitrogen.

In an embodiment of the present disclosure, when a silicon-carbon composite is etched with an argon (Ar) ion beam at an energy of 1,000 eV for 5,000 seconds and is then analyzed by XPS, a ratio of the proportion of Si measured from the $Si^{2p}$ spectrum to the proportion of N measured from the $N^{1s}$ spectrum may be approximately 35 to 200.

In the silicon-carbon composite according to an embodiment of the present disclosure, the lower limit of the ratio of the proportion of Si to the proportion of N may be approximately 35 or more, 37 or more, or 40 or more, and the upper limit may be approximately 200 or less, 150 or less, or 100 or less.

A secondary battery using a negative electrode active material in which the ratio of the proportion of Si to the proportion of N at the surface of a silicon-carbon composite satisfies the above range exhibits excellent capacity, efficiency, and lifespan. For example, when the ratio of the proportion of Si to the proportion of N at the surface of a silicon-carbon composite is within the above range, battery capacity and efficiency may increase, resulting in enhanced cell energy density and excellent cycle performance and high-rate characteristics.

For example, amorphous silicon causes unstable processability in an aqueous slurry phase, but when N is doped within the above ratio range to form an Si-N phase, stability during processing may be secured, and the Si-N phase acts as a buffer against volume expansion during charge-discharge, thereby achieving the effect of improving long-term lifespan performance.

In an embodiment of the present disclosure, when a silicon-carbon composite is etched with an argon (Ar) ion beam at an energy of 1,000 eV for 5,000 seconds and is then analyzed by XPS, the proportion of N measured from the $N^{1s}$ spectrum may be approximately 0.35 atm% or more, based on 100 atm% of the total Si, C, O, and N contents in the silicon-carbon composite. For example, the lower limit of the proportion of N may be approximately 0.35 atm% or more, 0.37 atm% or more, or 0.40 atm% or more, and the upper limit may be approximately 2 atm% or less, 1.5 atm% or less, or 1 atm% or less.

When the proportion of N is within the above range, cycle performance and high-rate characteristics are excellent, and the cell energy density may be increased due to high capacity and efficiency.

In an embodiment of the present disclosure, when a silicon-carbon composite is etched with an argon (Ar) ion beam at an energy of 1,000 eV for 5,000 seconds and is then analyzed by XPS, the proportion of Si measured from the $Si^{2p}$ spectrum may be approximately 20 atm% or more and 50 atm% or less. For example, the lower limit of the proportion of Si may be approximately 20 atm% or more, 25 atm% or more, or 28 atm% or more, and the upper limit may be approximately 50 atm% or less, 40 atm% or less, or approximately 35 atm% or less.

When the proportion of Si is maintained within the above range, the capacity and efficiency may be increased, resulting in enhanced cell energy density and excellent cycle performance and high-rate characteristics.

In an embodiment of this specification, in a silicon-carbon composite material obtained by depositing silicon on porous carbon, in order to satisfy the peak ratio mentioned above, at least one of a method of adjusting the mixing ratio of a nitrogen source gas in a step of heating a carbon-based powder and a method of adjusting the mixing ratio using a silane/nitrogen source gas mixture in a step of depositing silicon may be performed.

In an embodiment of this specification, the nitrogen source gas may be a nitrogen gas or ammonia gas, and may be, for example, a nitrogen gas.

According to an embodiment, a heating step may be performed in which, after a carbon-based powder is placed in an electric tubular furnace and a nitrogen gas is flowed to create an inert atmosphere, the temperature is gradually increased to approximately 300 °C to 500 °C, followed by further gradual heating to approximately 800 °C to 1,000 °C.

The powder obtained by heating may then be mixed with an acid solvent and then centrifuged to obtain a precipitate, and the obtained precipitate is neutralized in a basic solvent and dried to produce a porous carbon structure. At this time, the temperature at which the carbon-based particle is heated in the basic solvent may be approximately 700 °C to 900 °C.

The porous carbon structure may then be placed in an electric horizontal furnace, and an $SiH_4/N_2$ gas may be flowed at approximately 500 °C to 800 °C to prepare a silicon-carbon composite. For example, the temperature may be approximately 550 °C to 700 °C, or approximately 550 °C to 650 °C.

At this time, the mixing ratio of $SiH_4$ and $N_2$ $(SiH_4/N_2)$ may be approximately 97:3 to 88:12, for example approximately 95:5 to 90:10. The method may further include a step of forming a carbon layer by placing the silicon-carbon composite obtained through the above process into an electric furnace, performing heat treatment, and flowing a hydrocarbon gas at approximately 600 °C to 800 °C. According to an embodiment, the temperature may be approximately 550 °C to 770 °C, or 600 °C to 700 °C.

Meanwhile, a silicon-based powder may be placed in a horizontal tube, and an argon gas may be flowed to create an inert atmosphere, and then, the temperature may be gradually increased to induce disproportionation. At this time, the heat treatment temperature may be approximately 750 °C to 1,200 °C, for example, approximately 800 °C to 1,100 °C.

The heat-treated $SiO_x$ may then be taken out of the tube, subjected to acid treatment, and then stirred to remove an $SiO_2$ phase.

The obtained porous silicon may then be dried and subjected to chemical vapor deposition (CVD) with a hydrocarbon gas at approximately 550 °C to 850 °C to form a carbon layer. The hydrocarbon gas may be at least one selected from among methane, ethane, propane, and acetylene.

In the above deposition/coating temperature range, a carbon surface layer becomes uniform, and a silicon carbide is formed, thereby improving aqueous slurry processability.

In an embodiment of this specification, in a case of compositing carbon with porous silicon, in order to satisfy the peak ratio mentioned above, compositing may be carried out by mixing a hydrocarbon/nitrogen gas mixture at a predetermined ratio during the CVD process.

For example, the mixing ratio of hydrocarbon to nitrogen may be approximately 97:3 to 88:12, for example approximately 95:5 to 90:10.

According to an embodiment, the silicon-carbon composite may exhibit a surface area of approximately 0.5 $m^2$/g to 10 $m^2$/g by a Brunauer-Emmett-Teller (BET) method, a pore volume of approximately 0.005 $cm^3$/g to 0.03 $cm^3$/g, and a pore size of approximately 1 nm to 20 nm measured by the BET method. The silicon-carbon composite may have a pore volume of approximately 0.005 $cm^3$/g to 0.03 $cm^3$/g as measured by a mercury intrusion method.

According to an embodiment, the silicon-carbon composite may exhibit a $D_{90}$ particle diameter of approximately 5 $\mu$m to 15 $\mu$m, a $D_{50}$ particle diameter of approximately 1 $\mu$m to 10 $\mu$m, a $D_{min}$ of 1 $\mu$m to 3 $\mu$m, and a $D_{max}$ of approximately 17 $\mu$m to 23 $\mu$m. In this specification, the average particle diameter ($D_{50}$) may be defined as a particle diameter corresponding to 50% of the cumulative volume in a particle diameter distribution curve. The average particle diameter ($D_{50}$) may be measured, for example, using a laser diffraction method. The laser diffraction method is generally capable of measuring particle diameters ranging from the submicron region to several millimeters, and provides highly reproducible and highly resolvable results.

An embodiment provides a negative electrode active material including the silicon-carbon composite according to the above-described embodiments.

An embodiment provides a negative electrode composition including the negative electrode active material according to the above-described embodiment, a binder, and a conductive material.

According to an embodiment, the silicon-carbon composite may be included in an amount of approximately 0.1 parts by weight to 15 parts by weight, for example, approximately 0.1 parts by weight to 10 parts by weight, or 1 part by weight to 8 parts by weight, based on 100 parts by weight of the negative electrode active material.

According to an embodiment, the negative electrode active material may further include a carbon-based active material. The carbon-based active material may be included in an amount of approximately 70 parts by weight or more and 99.9 parts by weight or less, for example, 85 parts by weight to 99 parts by weight, based on 100 parts by weight of the total negative electrode active material included in the negative electrode composition. The carbon-based active material may include at least one of natural graphite and artificial graphite. When the carbon-based active material includes both natural graphite and artificial graphite, the weight ratio of artificial graphite to natural graphite may be approximately 1:9 to 9:1, for example, approximately 3:7 to 7:3. For example, the natural graphite may be approximately 10 parts by weight to 70 parts by weight, and the artificial graphite may be approximately 30 parts by weight to 90 parts by weight, based on 100 parts by weight of the carbon-based active material.

The natural graphite refers to graphite that occurs naturally, examples of which include scaled graphite, scaly graphite, or soil graphite. The natural graphite has advantages of being abundant and inexpensive, with a high theoretical capacity and compaction density, and enabling high output.

In an example, spherical natural graphite may be used as the natural graphite, and may have a sphericity of approximately 0.9 or more. In an example, the natural graphite may be spherical natural graphite having a tap density of approximately 0.9 g/cc or more.

In this specification, the sphericity may be a value obtained by dividing the circumference of a circle having the same area as the projected image of a particle by the perimeter of the projected image. The sphericity may be obtained from a scanning electron microscope (SEM) image, or may be measured using a particle shape analyzer such as a sysmex FPIA 3000 (Malvern). Further, the crystal size may be confirmed through XRD analysis.

According to an embodiment of the present disclosure, the negative electrode composition may further include a binder and a conductive material, and the binder may be an aqueous binder.

The binder may include at least one selected from among polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, ethylenepropylene-diene monomer (EPDM), sulfonated EPDM, styrene butadiene rubber (SBR), fluororubber, polyacrylic acid, and substances in which hydrogen of these is substituted with Li, Na, Ca, or others, and may also include various copolymers thereof.

The conductive material is not particularly limited as long as it has conductivity without causing chemical changes in the battery. Examples of the conductive material may include graphite such as natural graphite and artificial graphite; carbon blacks such as acetylene black, Ketjen black, channel black, furnace black, lamp black, and thermal black; conductive fibers such as carbon fiber or metal fiber; conductive tubes such as carbon nanotubes; metal powder such as fluorocarbon, aluminum, or nickel powder; conductive whiskers such as zinc oxide or potassium titanate; conductive metal oxides such as titanium oxide; or conductors such as a polyphenylene derivatives.

According to an embodiment, the aqueous binder may be included in an amount of approximately 1 wt% to 5 wt%, for example, approximately 3 wt% to 4 wt%, based on solids of the negative electrode composition, and the conductive material may be included in an amount of approximately 0.1 wt% to 2 wt%, for example, approximately 1 wt%, based on solids of the negative electrode composition.

An embodiment of the present disclosure provides the negative electrode 120 including the negative electrode composition according to the above-described embodiments.

For example, the negative electrode 120 may include the negative electrode current collector 122 and the negative electrode active material layer 124 disposed on at least one surface of the negative electrode current collector 122. The negative electrode active material layer 124 includes the negative electrode composition according to the above-described embodiment.

The negative electrode active material layer 124 may be formed by applying a negative electrode slurry including the above-described negative electrode composition to at least one surface of the negative electrode current collector 122, followed by drying and rolling.

The negative electrode current collector 122 is not particularly limited as long as it has conductivity without causing chemical changes in the battery. For example, copper, stainless steel, aluminum, nickel, titanium, sintered carbon, or a surface-treated material in which the surface of aluminum or stainless steel is treated with carbon, nickel, titanium, silver, or others may be used as the current collector 122. According to an embodiment, a transition metal such as copper or nickel that adsorbs carbon well may be used as the current collector 122. The thickness of the current collector 122 may be approximately 6 $\mu$m to 20 $\mu$m, but is not limited thereto.

The negative electrode slurry may include a solvent for negative electrode slurry formation. For example, the solvent for negative electrode slurry formation may include at least one selected from among distilled water, ethanol, methanol, and isopropyl alcohol, for example, distilled water, in view of facilitating dispersion of components.

An embodiment of the present disclosure provides the lithium secondary battery 100 including the negative electrode 120 according to the above-described embodiment, the positive electrode 110, and the separator 130.

The positive electrode 110 may include a positive electrode current collector and a positive electrode active material layer formed on the positive electrode current collector and including a positive electrode active material.

In the positive electrode 110, the positive electrode current collector is not particularly limited as long as it has conductivity without causing chemical changes in the battery. For example, stainless steel, aluminum, nickel, titanium, sintered carbon, or a surface-treated material in which the surface of aluminum or stainless steel is treated with carbon, nickel, titanium, silver, or others may be used as the positive electrode current collector. Further, the positive electrode current collector may usually have a thickness of approximately 3 $\mu$m to 500 $\mu$m, and fine irregularities may be formed on the surface of the positive electrode current collector to increase the adhesion of the positive electrode active material. For example, the positive electrode current collector may be used in various forms such as a film, sheet, foil, net, porous body, foam, and non-woven fabric.

The positive electrode active material may be any usually used positive electrode active material. Examples of the positive electrode active material may include layered compounds such as a lithium cobalt oxide ($LiCoO_2$) and lithium nickel oxide ($LiNiO_2$), or compounds substituted with one or more transition metals; lithium iron oxides such as $LiFe_3O_4$; lithium manganese oxides such as those represented by a chemical formula of $Li_{1+c1}Mn_{2-c1}O_4$($0 \leq c1 \leq 0.33$), $LiMnO_3$, $LiMn_2O_3$, and $LiMnO_2$; lithium copper oxides ($Li_2CuO_2$); vanadium oxides such as $LiV_3O_8$, $V_2O_5$, and $Cu_2V_2O_7$; Ni-site type lithium nickel oxides such as those represented by a chemical formula of $LiNi_{1-c2}M_{c2}O_2$ (wherein, M is at least one selected from among Co, Mn, Al, Cu, Fe, Mg, B, and Ga, and satisfies $0.01 \leq c2 \leq 0.3$); lithium manganese composite oxides such as those represented by a chemical formula of $LiM_{n2-c3}M_{c3}O_2$(wherein, M is at least one selected from among Co, Ni, Fe, Cr, Zn and Ta, and satisfies $0.01 \leq c3 \leq 0.1$) or $Li_2M_{n3}MO_8$ (wherein, M is at least one selected from among Fe, Co, Ni, Cu and Zn); and $LiMn_2O_4$ in which a part of Li in the chemical formula is substituted with an alkali earth metal ion, but are not limited thereto. The positive electrode 110 may be an Li-metal.

The positive electrode active material layer may include a positive electrode conductive material and a positive electrode binder, along with the above-described positive electrode active material.

The positive electrode conductive material is used to impart conductivity to the electrode, and may be used without particular limitations as long as it has electronic conductivity without causing chemical changes in the battery. Examples of the positive electrode conductive material may include graphite such as natural graphite and artificial graphite; carbon-based materials such as carbon black, acetylene black, Ketjen black, channel black, furnace black, lamp black, thermal black, and carbon fibers; metal powder or metal fibers such as copper, nickel, aluminum, and silver;

conductive whiskers such as zinc oxide or potassium titanate; conductive metal oxides such as titanium oxide; or conductive polymers such as polyphenylene derivatives. These may be used alone or as a mixture of two or more of these.

In addition, the positive electrode binder serves to improve adhesion between positive electrode active material particles and adhesion between the positive electrode active material and the positive electrode current collector. Examples of the positive electrode binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene polymer (EPDM), sulfonated-EPDM, styrene butadiene rubber (SBR), fluororubber, or various copolymers thereof. These may be used alone or as a mixture of two or more of these.

The separator 130 separates the negative electrode 120 from the positive electrode 110 and provides a lithium ion movement passage, and may be any separator typically used in secondary batteries without particular limitations, as long as it has low resistance to electrolyte ion movement and excellent electrolyte impregnation properties. Examples of the separator may include a porous polymer film manufactured from polyolefin-based polymers such as ethylene homopolymer, propylene homopolymer, ethylene/butene copolymer, ethylene/hexene copolymer, and ethylene/methacrylate copolymer, or a stacked structure of two or more layers of these. Additionally, usual porous nonwoven fabrics, for example, non-woven fabrics made of high-melting-point glass fibers or polyethylene terephthalate fibers may also be used. Additionally, a coated separator containing a ceramic component or polymer material may also be used to secure heat resistance or mechanical strength, and may be selectively used in a single-layer or multi-layer structure.

The lithium secondary battery 100 may further include the electrolyte 140. Examples of the electrolyte may include an organic liquid electrolyte, inorganic liquid electrolyte, solid polymer electrolyte, gel-type polymer electrolyte, solid inorganic electrolyte, or molten inorganic electrolyte, which may be used in the manufacture of lithium secondary batteries, but are not limited thereto.

According to an embodiment, the electrolyte 140 may include a non-aqueous organic solvent and a metal salt.

Examples of the non-aqueous organic solvent may include aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolan, formamide, dimethylformamide, dioxolan, acetonitrile, nitromethane, methyl formate, methyl acetate, phosphoric acid triester, trimethoxy methane, dioxolan derivatives, sulfolane, methyl sulfolane, 1,3-dimethyl-2-imidazolidinone, propylene carbonate derivatives, tetrahydrofuran derivatives, ethers, methyl propionate, and ethyl propionate.

Among the carbonate-based organic solvents, cyclic carbonates such as ethylene carbonate and propylene carbonate may be desirably used since they exhibit high viscosity and high dielectric constants, and thus may readily dissociate lithium salts. By mixing such cyclic carbonates with low-viscosity and low-dielectric constant linear carbonates such as dimethyl carbonate and diethyl carbonate at an appropriate ratio, the electrolyte 140 having high electrical conductivity may be prepared.

The metal salt may be a lithium salt, and the lithium salt may be a material that is easily dissolved in the non-aqueous electrolyte. For example, the lithium salt may include one or more types of anions selected from among $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

In addition to the aforementioned electrolyte components, the electrolyte 140 may further include one or more additives, for example, haloalkylene carbonate compounds such as difluoroethylene carbonate, pyridine, triethyl phosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, or aluminum trichloride, in order to achieve improved battery lifespan characteristics, prevention of battery capacity reduction, and improved battery discharge capacity.

According to another embodiment of the present disclosure, there is provided a battery module including the lithium secondary battery 100 as a unit cell and a battery pack including the same. Since the battery module and the battery pack include the secondary battery having high capacity, high rate characteristics, and excellent cycle characteristics, they may be used as a power supply for medium- and large-scale devices selected from the group consisting of an electric vehicle, hybrid electric vehicle, plug-in hybrid electric vehicle, and power storage system.

Hereinafter, Examples in this specification will be described in detail. However, Examples according to this specification may be modified into various other forms, and the scope of the present application should not be construed as being limited to Examples described below. Examples of the present application are provided to more fully describe this specification to those of ordinary skill in the art.

**<Example 1>**

**(1) Preparation of Silicon-carbon composite 1**

Cellulose powder was placed in an electric tubular furnace and heated to 400 °C at a rate of 4 °C/min, followed by heating for 2 hours under a nitrogen atmosphere. Thereafter, the electric tubular furnace temperature was raised to 900 °C at a rate of 4 °C/min, and the sample was further heated for 2 hours under a nitrogen atmosphere. The resulting powder was mixed with sulfuric acid and nitric acid at a volume ratio of 3:1, stirred at 60 °C for 2 hours, and then centrifuged to obtain a precipitate. The obtained powder was washed five times in a solvent mixture of ethanol and distilled water at a volume ratio of 1:3, and then dried at 120 °C for 12 hours. A carbon-based particle was placed in a KOH solvent and heated at 800 °C for 2 hours under a nitrogen atmosphere to obtain a porous carbon structure. The porous carbon structure was washed three times with distilled water and then dried at 120 °C for 12 hours or longer. The porous carbon structure was classified so that an average particle diameter ($D_{50}$) thereof was adjusted to 9 $\mu$m. The porous carbon structure was placed in an electric horizontal furnace, and a mixed gas of $SiH_4/N_2$=95/5 was supplied at a flow rate of 50 ml/min at 650 °C for 1 hour to prepare a silicon-carbon composite. The silicon-carbon composite was then subjected to oxidation treatment in an electric furnace, followed by reaction with an acetylene gas at 600 °C for 3 hours, thereby preparing a silicon-carbon composite negative electrode active material including a carbon layer on the outermost surface thereof.

**(2) Manufacture of Negative Electrode**

A negative electrode active material including the prepared silicon-carbon composite, natural graphite, and artificial graphite at a weight ratio of 10:15:75; a conductive material including carbon black and SWCNT; and a binder including carboxymethyl cellulose (CMC) and styrene butadiene rubber (SBR) were mixed with an appropriate amount of distilled water so that the total solid content was approximately 46 wt% at a weight ratio of 95.3:1:3.6, thereby preparing a negative electrode slurry.

The negative electrode slurry was applied to a Cu metal foil having a thickness of approximately 15 $\mu$m, followed by drying at 60 °C in circulating air. Subsequently, after rolling, it was further dried in a vacuum oven at 130 °C for approximately one day, and then punched to manufacture circular negative electrodes with an area of 1.4875 cm$^2$.

**(3) Manufacture of Secondary Battery**

An Li metal foil punched to an area of 1.7671 cm$^2$ was used as a positive electrode. A porous polyethylene separator was interposed between the positive electrode and the negative electrode, and an electrolyte was injected, in which 1 M LiPF$_6$ is dissolved in a mixed solution of ethyl methyl carbonate (EMC) and ethylene carbonate (EC) at a volume ratio of 7:3 including an additive, thereby manufacturing an Li coin half-cell.

**<Example 2>**

**(1) Preparation of Silicon-carbon composite 2**

A silicon-carbon composite was prepared in the same manner as in Example 1 except that a mixed gas of $SiH_4/N_2$=90/10 was flowed at a rate of 50 ml/min at 650 °C for 1 hour.

**(2) Manufacture of Negative Electrode and Secondary Battery**

A negative electrode and a secondary battery were manufactured in the same manner as in Example 1 except that the silicon-carbon composite 2 was used.

**<Example 3>**

**(1) Preparation of Silicon-carbon composite 3**

A silicon-carbon composite was prepared in the same manner as in Example 1 except that a mixed gas of $SiH_4/N_2$=95/5 was flowed at a rate of 50 ml/min at 550 °C for 1 hour.

**(2) Manufacture of Negative Electrode and Secondary Battery**

A negative electrode and a secondary battery were manufactured in the same manner as in Example 1 except that the silicon-carbon composite 3 was used.

**<Example 4>**

**(1) Preparation of Silicon-carbon composite 4**

$SiO_x$ (0<x≤1) having a $D_{50}$ of 6 μm was placed in a horizontal tube, and an argon (Ar) gas was flowed at a rate of 1500 sccm for 1 hour to create an inert atmosphere. Then, the argon gas was flowed at a rate of 150 sccm, and the temperature was increased to 1,000 °C at a rate of 10 °C/min and maintained for 6 hours to induce disproportionation. The heat-treated $SiO_x$ (0 <x≤1) was taken out of the tube, immersed in a 20 wt% aqueous HF solution, and stirred at room temperature for 1 hour to remove an $SiO_2$ phase. The obtained porous silicon was dried in a vacuum oven at 600 °C for 12 hours. Thereafter, the dried porous silicon was subjected to CVD treatment, in which a nitrogen/acetylene gas mixture at a volume ratio of 1:9 was flowed at a rate of 100 sccm at 600 °C for 3 hours, thereby preparing a final silicon-carbon composite.

**(2) Manufacture of Negative Electrode and Secondary Battery**

A negative electrode and a secondary battery were manufactured in the same manner as in Example 1 except that the silicon-carbon composite 4 was used.

**<Comparative Example 1>**

**(1) Preparation of Silicon-carbon composite 5**

A silicon-carbon composite was prepared in the same manner as in Example 1 except that a mixed gas of $SiH_4/N_2$=95/5 was flowed at a rate of 50 ml/min at 500 °C for 1 hour.

**(2) Manufacture of Negative Electrode and Secondary Battery**

A negative electrode and a secondary battery were manufactured in the same manner as in Example 1 except that the silicon-carbon composite 5 was used.

**<Comparative Example 2>**

**(1) Preparation of Silicon-carbon composite 6**

A silicon-carbon composite was prepared in the same manner as in Example 1 except that a mixed gas of $SiH_4/N_2$=99/1 was flowed at a rate of 50 ml/min at 650 °C for 1 hour.

**(2) Manufacture of Negative Electrode and Secondary Battery**

A negative electrode and secondary battery were manufactured in the same manner as in Example 1 except that the silicon-carbon composite 6 was used.

**<Comparative Example 3>**

**(1) Preparation of Silicon-carbon composite 7**

A silicon-carbon composite was prepared in the same manner as in Example 4 except that a nitrogen/acetylene gas mixture at a volume ratio of 1:99 was flowed at a rate of 100 sccm and reacted at 750 °C for 3 hours.

**(2) Manufacture of Negative Electrode and Secondary Battery**

A negative electrode and a secondary battery were manufactured in the same manner as in Example 1 except that the silicon-carbon composite 7 was used.

**<Comparative Example 4>**

**(1) Preparation of Silicon-carbon composite 8**

A silicon-carbon composite was prepared in the same manner as in Example 1 except that a mixed gas of $SiH_4/N_2$=95/5 was flowed at a rate of 50 ml/min at 750 °C for 10 hours.

**(2) Manufacture of Negative Electrode and Secondary Battery**

A negative electrode and a secondary battery were manufactured in the same manner as in Example 1 except that the silicon-carbon composite 8 was used.

**<Comparative Example 5>**

**(1) Preparation of Silicon-carbon composite 9**

A ground Si particle and crushed carbon were mixed at 40 °C to prepare a silicon-carbon composite, which was then pulverized so that the average particle diameter was 7 $\mu$m. The pulverized silicon-carbon composite was reacted at 800 °C with a nitrogen/acetylene gas mixture at a volume ratio of 5:95, which was flowed at a rate of 100 sccm, for 3 hours, thereby producing silicon-carbon composite 9.

**(2) Manufacture of Negative Electrode and Secondary Battery**

A negative electrode and a secondary battery were manufactured in the same manner as in Example 1 except that the silicon-carbon composite 9 was used.

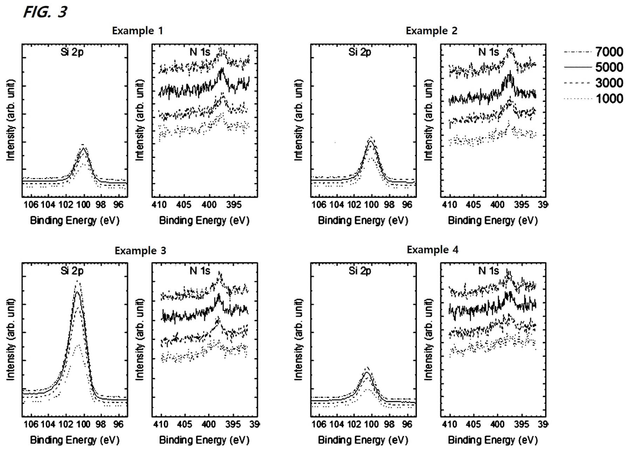

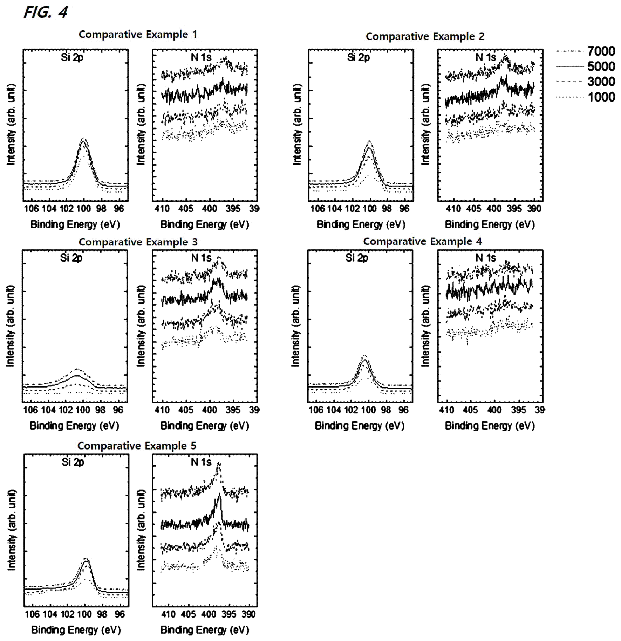

The results of XPS analysis of the negative electrode active materials prepared in the above Examples and Comparative Examples are illustrated in FIGS. 3 and 4 and in Table 1.

FIG. 3 illustrates spectra obtained when analyzing, using XPS, the secondary batteries of Examples, and FIG. 4 illustrates spectra obtained when analyzing, using XPS, the secondary batteries of Comparative Examples

The relative sensitivity factors used in the experiment were as follows.

$RSF_{Si}$=0.9
$RSF_N$ =1.676
$RSF_C$ =1.0
$RSF_O$ =2.881

[Table 1]

|  | Content ratio of Si | Content ratio of N | Proportion of Si/proportion of N |
|---|---|---|---|
| Example 1 | 32.0 | 0.4 | 77 |
| Example 2 | 26.3 | 0.7 | 40.7 |
| Example 3 | 27.6 | 0.3 | 92 |
| Example 4 | 32.7 | 0.5 | 62.2 |
| Comparative. Example 1 | 30.4 | 0.1 | 304 |
| Comparative. Example 2 | 32.0 | 0.1 | 320 |
| Comparative. Example 3 | 26.3 | 0.1 | 263 |
| Comparative. Example 4 | 87.9 | 0.4 | 220 |
| Comparative. Example 5 | 12.3 | 0.4 | 31 |

The discharge capacity, initial efficiency, capacity retention, and slurry viscosity variation of Examples and Comparative Examples were measured, and the results are illustrated in Table 2 below.

**<Discharge Capacity, Initial Efficiency, Capacity Retention>**

For the first and second cycles, charge-discharge was performed at 0.1 C, and from the third to the 299th cycle, charge-discharge was performed at 0.5 C. The 300th cycle was terminated in a charge state (with lithium contained in a negative electrode).

Charge condition: constant current (CC)/constant voltage (CV)(5 mV/0.005 C current cut-off)
Discharge condition: constant current (CC) condition 1.5 V

The discharge capacity (mAh/g) and the initial efficiency (%) were obtained from the results of the first charge-discharge cycle. Specifically, the initial efficiency (%) was obtained by the following calculation.

$$\text{Initial efficiency}(\%)=(\text{First discharge capacity/First charge capacity})\times100$$

The capacity retention was obtained by the following calculation.

$$\text{Capacity retention}(\%)= (299^{\text{th}} \text{ discharge capacity/first discharge capacity})\times100$$

[Table 2]

| Battery | Discharge capacity (mAh/g) | Initial efficiency (%) | Capacity retention (%) |
|---|---|---|---|
| Example 1 | 503 | 92.8 | 89.9 |
| Example 2 | 501 | 92.5 | 90.1 |
| Example 3 | 503 | 92.4 | 89.6 |
| Example 4 | 509 | 92.3 | 89.0 |
| Comparative. Example 1 | 485 | 89.1 | 84.1 |
| Comparative. Example 2 | 484 | 88.4 | 83.5 |
| Comparative. Example 3 | 492 | 88.4 | 83.0 |
| Comparative. Example 4 | 498 | 90.5 | 78.9 |
| Comparative. Example 5 | 478 | 87.6 | 75.1 |

As illustrated in Table 2, Examples 1 to 4, in which the ratio of the proportion of Si measured from the $Si^{2p}$ spectrum to the proportion of N measured from the $N^{1s}$ spectrum in Table 1 was 35 to 200, exhibited high discharge capacity and efficiency, and also excellent capacity retention.

In contrast, Comparative Examples 1 to 5, which did not satisfy the aforementioned ratio, showed inferior effects in terms of capacity, efficiency, and capacity retention. For example, in Comparative Examples 1, 2, and 4, although the silicon-carbon composites were prepared by depositing a silane gas onto porous carbon, excessive Si deposition compared to N occurred inside the silicon-carbon composite due to an inappropriate mixing ratio of silane gas to nitrogen or an inappropriate deposition temperature, and inferior cycle performance and high-rate characteristics were observed.

In Comparative Example 3, although the silicon-carbon composite was prepared by depositing an acetylene gas onto porous silicon, low cycle performance was observed due to excessive Si deposition compared to N inside the silicon-carbon composite, as compared with Example 4 in which the silicon-carbon composite was prepared in a similar manner.

In Comparative Example 5, it can be confirmed that excessive N compared to Si was present inside the silicon-carbon composite, resulting in a lower proportion of Si, which led to reduced energy density and inferior efficiency.

Although the embodiments of the present disclosure have been described above with reference to the Examples, it will be understood by those skilled in the art or having ordinary knowledge in the technical field that various modifications and changes may be made within the scope of the technical features of the various embodiments of the present disclosure described in the appended claims, without departing from the scope of the disclosure. Accordingly, the technical scope of the various embodiments of the present disclosure should be defined not by the detailed description of the specification, but by the scope of the appended claims.

**Claims**

1. A silicon-carbon composite, wherein, when subjected to etching with an argon (Ar) ion beam at an energy of 1,000 eV for 5,000 seconds followed by XPS analysis, a ratio of a proportion of Si measured from an $Si^{2p}$ spectrum to a proportion of N measured from an $N^{1s}$ spectrum is 35 to 200.

2. The silicon-carbon composite according to claim 1, wherein the proportion of N measured from the $N^{1s}$ spectrum is 0.35 atm% or more, based on 100 atm% of a total Si, C, O and N content in the silicon-carbon composite.

3. The silicon-carbon composite according to claim 1, wherein the silicon-carbon composite is a particle including a porous carbon particle and silicon provided on at least a part of an inside and a surface of the porous carbon particle; or a particle including a porous silicon particle and carbon provided on at least a part of an inside and a surface of the porous silicon particle.

4. A negative electrode active material comprising the silicon-carbon composite according to any one of claims 1 to 3; and a carbon-based active material.

5. The negative electrode active material according to claim 4, wherein the silicon-carbon composite is included in an amount of 0.1 parts by weight to 15 parts by weight, based on 100 parts by weight of the negative electrode active material.

6. A negative electrode composition comprising the negative electrode active material according to claim 4; a binder, and a conductive material.

7. The negative electrode composition according to claim 6, wherein the silicon-carbon composite is included in an amount of 0.1 parts by weight to 15 parts by weight, based on 100 parts by weight of the negative electrode active material.

8. The negative electrode composition according to claim 6, wherein the negative electrode active material includes artificial graphite and natural graphite.

9. A negative electrode comprising the negative electrode composition according to claim 6.

10. A lithium secondary battery comprising the negative electrode according to claim 9, a positive electrode, and a separator.

11. A battery module comprising the lithium secondary battery according to claim 10.

12. A battery pack comprising the lithium secondary battery according to claim 10.

13. A battery pack comprising the battery module according to claim 11.

14. A lithium secondary battery comprising:

   a positive electrode;
   a negative electrode; and
   a separator positioned between the positive electrode and the negative electrode,
   wherein the negative electrode includes a current collector and a negative electrode active material layer formed on at least one surface of the current collector,
   wherein the negative electrode active material layer includes a negative electrode composition including a negative electrode active material, a binder, and a conductive material, and
   wherein the negative electrode active material includes a silicon-carbon composite having, when subjected to etching with an argon (Ar) ion beam at an energy of 1,000 eV for 5,000 seconds followed by XPS analysis, a ratio of a proportion of Si measured from an $Si^{2p}$ spectrum to a proportion of N measured from an $N^{1s}$ spectrum is 35 to 200.

15. The lithium secondary battery according to claim 14, wherein the proportion of N measured from the $N^{1s}$ spectrum in the silicon-carbon composite is 0.35 atm% or more, based on 100 atm% of a total Si, C, O and N content in the silicon-carbon composite.

16. The lithium secondary battery according to claim 14, wherein the silicon-carbon composite is a particle including a porous carbon particle and silicon provided on at least a part of an inside and a surface of the porous carbon particle; or a particle including a porous silicon particle and carbon provided on at least a part of an inside and a surface of the porous silicon particle.

FIG. 1

100

130

110

120

140

150

FIG. 2

120

124

122

FIG. 3

FIG. 4

## INTERNATIONAL SEARCH REPORT

| International application No. |
|---|
| **PCT/KR2025/016655** |

### A. CLASSIFICATION OF SUBJECT MATTER

**H01M 4/587**(2010.01)i; **H01M 4/38**(2006.01)i; **H01M 4/36**(2006.01)i; **H01M 4/133**(2010.01)i; **H01M 4/134**(2010.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/587(2010.01); C01B 32/00(2017.01); C01B 32/05(2017.01); C01B 32/182(2017.01); C01B 33/00(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 실리콘 (silicon), 카본 (carbon), 복합체 (complex), 음극 (anode), 아르곤 (Argon), 이온빔 (ion beam), 식각 (etching), 벌크 (bulk), 다공성 (porous)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0158629 A (GROUP14 TECHNOLOGIES, INC.) 20 November 2023 (2023-11-20) <br> paragraphs [0002], [0022], [0075]-[0079], [0120], [0122] | 1-16 |
| A | KR 10-2024-0022437 A (SHINGHWA AMPEREX TECHNOLOGY (DONGYING) CO., LTD. et al.) 20 February 2024 (2024-02-20) <br> abstract; claims 1-10 | 1-16 |
| A | KR 10-2023-0131896 A (BTR NEW MATERIAL GROUP CO., LTD.) 14 September 2023 (2023-09-14) <br> abstract; claims 1-13; figure 2 | 1-16 |
| A | KR 10-2016-0091892 A (HYDRO-QUEBEC) 03 August 2016 (2016-08-03) <br> abstract; claims 1-34 | 1-16 |
| A | KR 10-2024-0034570 A (WI-FINE TECH CO., LTD.) 14 March 2024 (2024-03-14) <br> abstract; claims 1-11 | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 March 2026** | **05 March 2026** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/016655**

| Patent document cited in search report | | | Publication date (day/month/year) | Patent family member(s) | | | Publication date (day/month/year) |
|---|---|---|---|---|---|---|---|
| KR | 10-2023-0158629 | A | 20 November 2023 | CA | 3192060 | A1 | 24 February 2022 |
| | | | | CN | 116323482 | A | 23 June 2023 |
| | | | | CN | 116323482 | B | 20 June 2025 |
| | | | | CN | 116348413 | A | 27 June 2023 |
| | | | | CN | 120622496 | A | 12 September 2025 |
| | | | | EP | 4146595 | A1 | 15 March 2023 |
| | | | | EP | 4200252 | A1 | 28 June 2023 |
| | | | | JP | 2023-538609 | A | 08 September 2023 |
| | | | | JP | 2023-538913 | A | 12 September 2023 |
| | | | | JP | 7797481 | B2 | 13 January 2026 |
| | | | | KR | 10-2023-0017300 | A | 03 February 2023 |
| | | | | KR | 10-2023-0051676 | A | 18 April 2023 |
| | | | | KR | 10-2024-0028558 | A | 05 March 2024 |
| | | | | KR | 10-2600078 | B1 | 08 November 2023 |
| | | | | KR | 10-2640784 | B1 | 28 February 2024 |
| | | | | US | 11174167 | B1 | 16 November 2021 |
| | | | | US | 11335903 | B2 | 17 May 2022 |
| | | | | US | 11492262 | B2 | 08 November 2022 |
| | | | | US | 11498838 | B2 | 15 November 2022 |
| | | | | US | 11611070 | B2 | 21 March 2023 |
| | | | | US | 11639292 | B2 | 02 May 2023 |
| | | | | US | 11804591 | B2 | 31 October 2023 |
| | | | | US | 12057569 | B2 | 06 August 2024 |
| | | | | US | 2022-0055905 | A1 | 24 February 2022 |
| | | | | US | 2022-0055906 | A1 | 24 February 2022 |
| | | | | US | 2022-0059818 | A1 | 24 February 2022 |
| | | | | US | 2022-0059820 | A1 | 24 February 2022 |
| | | | | US | 2022-0064008 | A1 | 03 March 2022 |
| | | | | US | 2022-0246914 | A1 | 04 August 2022 |
| | | | | US | 2023-0155112 | A1 | 18 May 2023 |
| | | | | US | 2023-0219819 | A1 | 13 July 2023 |
| | | | | US | 2023-0348280 | A1 | 02 November 2023 |
| | | | | US | 2023-0348281 | A1 | 02 November 2023 |
| | | | | US | 2024-0030410 | A1 | 25 January 2024 |
| | | | | US | 2024-0047650 | A1 | 08 February 2024 |
| | | | | WO | 2022-040327 | A1 | 24 February 2022 |
| | | | | WO | 2022-040328 | A1 | 24 February 2022 |
| KR | 10-2024-0022437 | A | 20 February 2024 | CN | 115101741 | A | 23 September 2022 |
| | | | | CN | 115101741 | B | 07 April 2023 |
| | | | | EP | 4567920 | A1 | 11 June 2025 |
| | | | | JP | 2024-532023 | A | 05 September 2024 |
| | | | | JP | 7685591 | B2 | 29 May 2025 |
| | | | | KR | 10-2655588 | B1 | 09 April 2024 |
| | | | | WO | 2024-031867 | A1 | 15 February 2024 |
| KR | 10-2023-0131896 | A | 14 September 2023 | CN | 115911292 | A | 04 April 2023 |
| | | | | CN | 115911292 | B | 22 November 2024 |
| | | | | EP | 4266416 | A1 | 25 October 2023 |
| | | | | EP | 4266416 | A4 | 12 March 2025 |
| | | | | JP | 2024-505295 | A | 05 February 2024 |
| | | | | JP | 7670275 | B2 | 30 April 2025 |

Form PCT/ISA/210 (patent family annex) (July 2022)

**INTERNATIONAL SEARCH REPORT**
**Information on patent family members**

International application No.

**PCT/KR2025/016655**

| Patent document cited in search report | | | Publication date (day/month/year) | Patent family member(s) | | | Publication date (day/month/year) |
|---|---|---|---|---|---|---|---|
| | | | | KR | 10-2924226 | B1 | 09 February 2026 |
| | | | | US | 2024-0322131 | A1 | 26 September 2024 |
| | | | | WO | 2023-051205 | A1 | 06 April 2023 |
| KR | 10-2016-0091892 | A | 03 August 2016 | CA | 2835583 | A1 | 28 May 2015 |
| | | | | CA | 2928933 | A1 | 04 June 2015 |
| | | | | CA | 2928933 | C | 28 February 2023 |
| | | | | CN | 105793194 | A | 20 July 2016 |
| | | | | CN | 114620732 | A | 14 June 2022 |
| | | | | EP | 3083498 | A1 | 26 October 2016 |
| | | | | EP | 3083498 | B1 | 26 May 2021 |
| | | | | EP | 3896034 | A1 | 20 October 2021 |
| | | | | ES | 2883117 | T3 | 07 December 2021 |
| | | | | JP | 2017-503738 | A | 02 February 2017 |
| | | | | JP | 2019-089709 | A | 13 June 2019 |
| | | | | JP | 6652487 | B2 | 26 February 2020 |
| | | | | KR | 10-2022-0025150 | A | 03 March 2022 |
| | | | | KR | 10-2362444 | B1 | 14 February 2022 |
| | | | | US | 10329157 | B2 | 25 June 2019 |
| | | | | US | 2017-0260057 | A1 | 14 September 2017 |
| | | | | US | 2019-0367375 | A1 | 05 December 2019 |
| | | | | WO | 2015-077892 | A1 | 04 June 2015 |
| KR | 10-2024-0034570 | A | 14 March 2024 | KR | 10-2770351 | B1 | 20 February 2025 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020240144985